# EUROPÄISCHE PATENTSCHRIFT

(11) **EP 2 463 338 B1**
(45) Veröffentlichungstag und Bekanntmachung des Hinweises auf die Patenterteilung: **28.08.2013**
(21) Anmeldenummer: 10194721.6
(22) Anmeldetag: 13.12.2010
(51) Int. Cl.: C08J 11/04, C08J 11/06, C08L 67/02

(54) **Verfahren zur Optimierung des Kristallisationsverhaltens von Polyester Formmassen**
Process for the optimization of crystallisation behaviour of polyester moulding materials
Procédé d'optimisation du comportement de cristallisation de masses moulées à base de polyester

(43) Veröffentlichungstag der Anmeldung: 13.06.2012
(73) Patentinhaber: LANXESS Deutschland GmbH, 51369 Leverkusen (DE)
(72) Erfinder: Plutowski, UIrich Dr., 41539 Dormagen (DE); Bienmüller, Matthias Dr., 47803 Krefeld (DE)

(56) Entgegenhaltungen:
- WO-A1-2008/052998
- GB-A- 1 386 548
- US-A- 4 436 860
- US-A- 4 444 931
- US-A1- 2004 209 984
- DATABASE WPI Week 201048 Thomson Scientific, London, GB; AN 2010-H87456 XP002628287, & CN 101 724 229 A (SHANGHAI HONGJINYIN IND CO LTD) 9. Juni 2010 (2010-06-09)

## Beschreibung

Die Erfindung betrifft Zusammensetzungen auf Basis von Polyethylenterephthalat und Polybutylenterephthalat mit einem optimierten Kristallisationsverhalten und daraus folgendem optimierten Verarbeitungsverfahren im Spritzguss sowie daraus herzustellende Erzeugnisse insbesondere mit optimierter Kristallinität.

Zusammensetzungen, die Polybutylenterephthalat (PBT) und Polyethylenterephthalat (PET) enthalten, werden in der Praxis häufig verwendet, um Spritzgussteile herzustellen. Solche Spritzgussteile zeigen in der Regel vorteilhafte Eigenschaften in Bezug auf gute mechanische Kennwerte in Kombination mit guter Oberfläche. Nachteilig jedoch ist, dass solche Zusammensetzungen im Spritzgussverfahren hohe Werkzeugtemperaturen erfordern, da nur so eine ausreichende Kristallisation des PET erzielt werden kann. Hohe Werkzeugtemperaturen stellen höhere technische Anforderungen an die Spritzgusseinheit und führen zu längeren Zykluszeiten.

Die Gesamtkristallisationsrate von Polyestern kann erhöht werden durch verschiedene Nukleierungsadditive, wie z.B. Mineralien, Salze, Pigmente, etc. Solche heterogenen Nukleierungsmittel können jedoch die mechanischen Eigenschaften und/oder die Polyesterstabilität nachteilig beeinträchtigen. US-Patent 3,833,535 beschreibt die Zugabe von Nukleierungsmitteln zu Polyestern und US-Patent 5,344,892 beschreibt die Zugabe eines Alkalimetallsalzes eines Polyphenylenethers als Nukleierungsmittel, um die Kristallinität zu beeinflussen. EP1,3776,37 B1 beschreibt die Verbesserung der Kristallinität thermoplastischer cycloaliphatischer Polyesterharze und eine daraus resultierende gute Verarbeitbarkeit durch Zugabe von Fluorpolymer. Eine verfahrenstechnische Beeinflussung des Kristallisationsverhaltens von PET-Kunststoffen ist aus DE 202004020483 U 1 bekannt. Nachteilig an den im Stand der Technik beschriebenen Zusammensetzungen oder Verfahrensvarianten ist die Tatsache, dass durch Zugabe von Hilfsstoffen Nachteile in den übrigen Eigenschaften der Zusammensetzungen hingenommen werden müssen.

US 2004/209984 A1 beschreibt den Einsatz von PBT mit PET- Rezyklat als Polyester. Zudem offenbart diese Schrift die Benutzung von Natriumtartrat oder Kaliumtartrat um die Kristallisation zu verbessern.

US 4436860 A beschreibt die Kombination von PET, PBT und Glasfasern für Zusammensetzungen, die eine hohe Kristallinität aufweisen. Nuklierungsmittel können vorzugsweise eingesetzt werden. Kein PET-Rezyklat ist offenbart.

US 2008/052998 A1 beschreibt Zusammensetzungen, die eine gute Fliessfähigkeit und reduzierte Emission aufweisen. Diese Polyesterzusammensetzungen bestehen aus PET, Talkum, Schmiermittel und Alkohol. PET kann PET-Rezyklat sein. Keine Effekte auf Kristallinität werden offenbart.

US 4444931 A beschreibt Zusammensetzungen aus PET und PBT und Bariumsulfat (u.a). Keine Trocknung der Polymere erfolgt vor der Mischung.

GB 1386548 A beschreibt Zusammensetzungen aus PBT, Glasfasern und PET mit Dimensionstabilität.

CN 101724229 A beschreibt den Einsatz von PET/ Nuklierungsmittel Mischungen in PBT-Zusammensetzungen (Kristallinität). Andere Zusatzstoffe können vorhanden sein.

Die Aufgabe der vorliegenden Erfindung besteht deshalb darin, PBT und PET enthaltende Zusammensetzungen zur Verfügung zu stellen, die ein optimiertes Kristallisationsverhalten und in Folge dessen ein optimiertes Verarbeitungsverhalten aufweisen ohne dass die Zugabe weiterer Hilfsstoffe zwingend erforderlich ist.

Die Lösung der Aufgabe und Gegenstand der vorliegenden Erfindung ist ein Verfahren zur Optimierung des Kristallisationsverhaltens von Polyester Formmassen bzw. der Kristallinität der daraus herzustellenden Erzeugnisse, dadurch gekennzeichnet, dass eine Zusammensetzung enthaltend PBT und PET in einem Gewichtsverhältnis von 5:1 bis 0.2:1, bevorzugt 2.2:1 bis 0.5:1, insbesondere bevorzugt 1.5:1 bis 0.8:1 eingesetzt wird wobei das PET einen Natrium- und / oder Kalium-Gehalt, bevorzugt einen Natrium-Gehalt, von 1 bis 10000 ppm, bevorzugt 3 bis 5000 ppm, besonders bevorzugt größer 7 bis 1000 ppm aufweist, und das PET in Form von Rezyklat aus granulat, Flakes oder Mahlgut eingesetzt wird, und man das PET nach den Verfahrensschritten
a) Waschen des PET, bevorzugt PET Flakes, die durch Schreddern von gebrauchten PET Flaschen erhalten werden, mit Laugehaltigem Wasser,
b) Aufschmelzen und Durchmischen des PET in einem Compounder, gegebenenfalls Anlegen von Vakuum (Entgasung) mit oder ohne Strippen zur Entfernung flüchtiger Kontaminationen, anschließend Austragen und Erstarren der Schmelze und Granulierung erhält.

Die vorliegende Erfindung betrifft aber auch die Verwendung von Granulat, Flakes oder Mahlgut aus PET Rezyklat mit einer maximalen Kantenlänge von 15 mm zur Optimierung des Kristallisationsverhaltens von Polyester Formmassen bzw. der Kristallinität der daraus herzustellenden Erzeugnisse, dadurch gekennzeichnet, dass in den Zusammensetzungen auf Basis von PBT und PET diese in einem Gewichtsverhältnis von 5:1 bis 0,2:1, bevorzugt 2.2:1 bis 0.5:1, insbesondere bevorzugt 1.5:1 bis 0.8:1 eingesetzt werden und das PET einen Natrium- und/oder Kalium-Gehalt von 1 bis 10000 ppm, bevorzugt 3 bis 5000 ppm, besonders bevorzugt größer 7 bis 1000 ppm aufweist, der durch Waschen des PET mit laugehaltigem Wasser herrührt, wobei Natronlauge- und/oder Kalilaugehaltiges Wasser eingesetzt wird.

PET bzw. PBT sind Reaktionsstoffe aus aromatischen Dicarbonsäuren oder ihren reaktionsfähigen Derivaten, bevorzugt Dimethylestern oder Anhydriden, und aliphatischen, cycloaliphatischen oder araliphatischen Diolen und Mischungen dieser Reaktionsprodukte.

Sie lassen sich aus Terephthalsäure (oder ihren reaktionsfähigen Derivaten) und den jeweiligen aliphatischen Diolen mit 2 (im Falle des PET) bzw. 4 C-Atomen (im Falle des PBT) nach bekannten Methoden herstellen (Kunststoff-Handbuch, Bd. VIII, S. 695 FF, Karl-Hanser-Verlag, München 1973).

Bevorzugte Polyethylenterephthalate (PET) bzw. Polybutylenterephthalate (PBT) enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykol- oder Butandiol-1,4-reste.

Die bevorzugten Polyethylenterephthalate bzw. Polybutylenterephthalate können neben Terephthalsäureresten bis zu 20 Mol-% Reste anderer aromatische Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, oder Cyclohexandicarbonsäure.

Die bevorzugten Polyethylenterephthalate bzw. Polybutylenterephthalate können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 oder -1,6,2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan (DE-A 24 07 674 (= US 4 035 958), DE-A 24 07 776, DE-A 27 15 932 (=US 4 176 224)).

Die erfindungsgemäß einzusetzenden PET bzw. PBT können durch Einbau relativ kleiner Mengen 3- oder 4-wertiger Alkohole oder 3- oder 4-basischer Carbonsäuren, wie sie z.B. in der DE-A 19 00 270 (= US-A 3 692 744) beschrieben sind, verzweigt werden. Bevorzugte Verzweigungsmittel sind Trimesinsäure, Trimellitsäure, Trimethylolethan und Trimethylolpropan und Pentaerythrit.

Die erfindungsgemäß einzusetzenden PET bzw. PBT besitzen bevorzugt eine intrinsische Viskosität von ca. 0,3 cm³/g bis 1,5 cm³/g, besonders bevorzugt 0,4 cm³/g bis 1,3 cm³/g, insbesonders bevorzugt 0,5 cm³/g bis 1,0 cm³/g jeweils gemessen in Phenol/o-Dichlorbenzol (1:1 Gew.-Teile) bei 25°C.

Weiterhin ist es vorteilhaft PET Rezyklate, auch scrap-PET genannt, einzusetzen.

Unter Rezyklaten versteht man im Allgemeinen:
1) sogenanntes. Post Industrial Rezyklat (auch Pre Consumer Rezyklat genannt): hierbei handelt es sich um Produktionsabfälle bei der Polykondensation, bei der Compoundierung (z.B. offspec-Ware) oder bei der Verarbeitung z.B. Angüsse bei der Spritzgussverarbeitung, Anfahrware bei der Spritzgussverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmässig bei weitem dominierende Artikel sind blasgeformte PET Flaschen für Mineralwasser, Softdrinks und Säfte.

Beide Arten von Rezyklat können entweder in Originalform des Artikels, in geschredderter Form (z.B. als Flakes), als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Flakes oder Mahlgut vorliegende Rezyklate können zum Einsatz kommen, wobei die maximale Kantenlänge 15 mm, vorzugsweise kleiner 5 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise 0,01 bis 0,7, insbesondere 0,2 bis 0,6 %.

Erfindungsgemäß bevorzugt geeignete PET-Rezyklate werden nach einem Verfahren gemäß DE 103 24 098 A1, WO 2004/009315 A1 oder nach WO 2007/116022 A2 erhalten.

Das erfindungsgemäß einzusetzende PET weist einen Natrium- und / oder Kalium-Gehalt, bevorzugt einen Natrium-Gehalt, von 1 bis 10000 ppm, bevorzugt 3 bis 5000 ppm, besonders bevorzugt größer 7 bis 1000 ppm auf. Setzt man PET-Rezyklat ein, so erhält man den erfindungsgemäß geforderten Alkalimetallgehalt wenn man PET nach den Verfahrensschritten
a) Waschen des PET, bevorzugt PET Flakes, die durch Schreddern von gebrauchten PET-Flaschen erhalten werden, mit Laugehaltigem Wasser, bevorzugt Natronlauge- und / oder Kalilaugehaltigem Wasser, besonders bevorzugt Natronlaugehaltigem Wasser,
b) Aufschmelzen und Durchmischen des PET in einem Compounder, bevorzugt in einem Compounder mit mehreren Schnecken" gegebenenfalls Anlegen von Vakuum (Entgasung) mit oder ohne Strippen zur Entfernung flüchtiger Kontaminationen, insbesondere von Acetaldehyd und Oligomeren, anschließend Austragen und Erstarren der Schmelze und Granulierung.
c) danach bevorzugt das Durchführen einer Festphasen-Nachkondensation unter Vakuum mit oder ohne Strippen oder unter Durchleitung eines inerten Gases zur Entfernung restlicher Kontaminationen und/oder Erhöhung der Viskosität
sowie gegebenenfalls einem Trocknungsschritt vor dem Aufschmelzen und/oder einem Kristallisationsschritt zwischen Granulation und Festphasen-Nachkondensation nach WO 2004/106025 A1 durchführt. Bevorzugt wird das PET mit Laugehaltigem Wasser im Konzentrationsbereich von 1-10%, besonders bevorzugt 3% vorgewaschen und ganz besonders bevorzugt danach mit einem mit Tensid versetzten Wasser oder mit Dampf feingereinigt. Bevorzugt wird dabei das PET vor dem Waschen zerkleinert und durch Vorwaschen und/oder Separieren vorbereitet, gereinigt und/oder von grobem Schmutz und Fremdstoffen getrennt und insbesondere PET-Flakes erzeugt. Der Trocknungsschritt erfolgt bevorzugt mit Heißluft oder durch Behandlung mit elektromagnetischen Wellen, insbesondere Infrarot oder Mikrowellen wobei die Trocknung bevorzugt bei Temperaturen von 120 bis 160 °C Grad, besonders bevorzugt bei 150 °C Grad und über einen Zeitraum von 1 bis 6 Stunden erfolgt. Der Kristallisationsschritt wird so lange durchgeführt bis das PET eine Teilkristallinität erreicht, die eine Verklebung bei der weiteren Verarbeitung verhindert und bevorzugt Werte von 30 bis 50%, besonders bevorzugt von 40% Teilkristallinität erreicht werden. Der Kristallisationsschritt wird bevorzugt bei Temperaturen von 130 bis 160 °C Grad, besonders bevorzugt bei 140 °C Grad für 10 bis 20 min, vorzugsweise 15 min durchgeführt. In einer bevorzugten Ausführungsform wird der Kristallisationsschritt in einem Heißluftstrom, besonders bevorzugt in einer Rüttelrinne durchgeführt. Das Strippen wird bevorzugt unter Inertgas durchgeführt. Das aufgeschmolzene PET-Material wird gegebenenfalls gefiltert wozu bevorzugt Wechselfilter und/oder Siebkombinationen in Kerzen- oder in Scheibenform mit einer Partikelgröße von vorzugsweise kleiner 100 Micrometer zum Einsatz kommen.

Als weitere Komponente können die erfindungsgemäßen Zusammensetzungen in einer bevorzugten Ausführungsform noch Additive enthalten.

Übliche Additive sind z.B. Stabilisatoren (zum Beispiel UV-Stabilisatoren, Thermostabilisatoren, Gammastrahlenstabilisatoren), Antistatika, Fließhilfsmittel, Flammschutzmittel und Flammschutzsynergisten, Entformungsmittel, Elastomermodifikatoren, Füll- und Verstärkungsstoffe, Brandschutzadditive, Emulgatoren, Nukleierungsmittel, Weichmacher, Gleitmittel, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Die den erfindungsgemäßen Zusammensetzungen beizufügenden Additive sind zu 0,01 bis 60 Gew.-%, bevorzugt 0,1 bis 50 Gew.-%, besonders bevorzugt 0,1 bis 35 Gew.-% Bestandteil der Zusammensetzungen. In einer besonders bevorzugten Ausführungsform ist die Summe aller Gew.-% inklusive PBT plus PET plus Additive 100% und entspricht damit der Gesamtzusammensetzung der erfindungsgemäßen Formmassen.

Als Stabilisatoren können bevorzugt sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Pigmente oder Farbstoffe können bevorzugt. Titandioxid, Ultramarinblau, Eisenoxid, Ruß, Phthalocyanine, Chinacridone, Perylene, Nigrosin und Anthrachinone eingesetzt werden.

Als Nukleierungsmittel können bevorzugt. Natrium- oder Calciumphenylphosphinat, Aluminiumoxid, Siliziumdioxid sowie bevorzugt Talkum eingesetzt werden.

Als Gleit- und Entformungsmittel können bevorzugt Esterwachse, Pentaeritrytoltetrastearat (PETS), langkettige Fettsäuren, insbesondere Stearinsäure oder Behensäure, deren Salze, insbesondere Ca- oder Zn-Stearat, sowie Amidderivate, insbesondere Ethylen-bis-stearylamid, oder Montanwachse, insbesondere Mischungen aus geradkettigen, gesättigten Carbonsäuren mit Kettenlängen von 28 bis 32 C-Atomen, sowie niedermolekulare Polyethylen- bzw. Polypropylenwachse eingesetzt werden.

Als Weichmacher können bevorzugt Phthalsäuredioctylester, Phthalsäuredibenzylester, Phthalsäurebutylbenzylester, Kohlenwasserstofföle, N-(n-Butyl)benzolsulfonamid eingesetzt werden.

Als Elastomermodifikatoren einzusetzende Additive können bevorzugt eines oder mehrere Pfropfpolymerisate E von
E.1 5 bis 95 Gew.-%, vorzugsweise 30 bis 90 Gew.-%, wenigstens eines Vinylmonomeren auf
E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage E.2 hat im Allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere E.1 sind vorzugsweise Gemische aus
E.1.1 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
E.1.2 1 bis 50 Gew.-% Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, α -Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetztenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte als Elastomermodifikator einzusetzende Polymerisate E sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen).

Die Elastomermodifikatoren bzw. Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind beispielsweise Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3631 539 (= US 4 812 515) beschrieben werden.

Als Flammschutzmittel einzusetzende Additive können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4236 122 (= CA 2 109 024 A1)) können eingesetzt werden. Als halogenhaltige, insbesondere bromierte und chlorierte Verbindungen seien bevorzugt Ethylen-1,2-bistetrabromphthalimid, epoxidiertes Tetrabrombisphenol 1 A-Harz, Tetrabrombisphenol-A-oligocarbonat, Tetrachlorbisphenol-A-oligocarbonat, Pentabrompolyacrylat, bromiertes Polystyrol. genannt. Als organische Phosphorverbindungen sind die Phosphorverbindungen gemäß WO-A 98/17720 (= US 6 538 024) geeignet, bevorzugt Triphenylphosphat (TPP), Resorcinol-bis-(diphenylphosphat) einschließlich Oligomere (RDP) sowie Bisphenol-A-bis-diphenylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind bevorzugt Antimonverbindungen, insbesondere Antimontrioxid und Antimonpentoxid, Zinkverbindungen, Zinnverbindungen wie z.B. Zinnstannat und Borate geeignet. Auch können dem Flammschutzmittel sogenannte Kohlenstoffbildner und Tetrafluorethylenpolymerisate zugesetzt werden.

Als Additive können Füll- und/oder Verstärkungsstoffe in den erfindungsgemäßen Zusammensetzungen enthalten sein. Zu diesen zählen insbesondere Glasfasern die bevorzugt einen Faserdurchmesser zwischen 7 und 18 µm, besonders bevorzugt zwischen 9 und 15 µm haben, und als Endlosfasern oder als geschnittene oder gemahlene Glasfasern zugesetzt werden. Die Fasern können mit einem geeigneten Schlichtesystem und einem Haftvermittler bzw. Haftvermittlersystem, bevorzugt auf Silanbasis, ausgerüstet sein.

Gebräuchliche Haftvermittler auf Silanbasis für die Vorbehandlung sind Silanverbindungen der allgemeinen Formel (I)

(X-(CH₂)_{q})k-Si-(O-CrH₂r+1)₄-k (I)

in der die Substituenten folgende Bedeutung haben:
X: 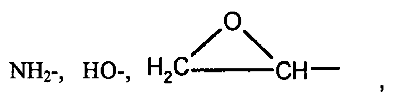
q: eine ganze Zahl von 2 bis 10, bevorzugt 3 bis 4,
r: eine ganze Zahl von 1 bis 5, bevorzugt 1 bis 2,
k: eine ganze Zahl von 1 bis 3, bevorzugt 1.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf die Glasfasern zur Oberflächenbeschichtung eingesetzt.

Die Glasfasern können bedingt durch die Verarbeitung zur Formmasse bzw. Formkörper in der Formmasse bzw. im Formkörper einen kleineren d97- bzw. d50-Wert aufweisen, als die ursprünglich eingesetzten Glasfasern. Die Glasfasern können bedingt durch die Verarbeitung zur Formmasse bzw. Formkörper in der Formmasse bzw. im Formkörper kürzere Längenverteilungen als ursprünglich eingesetzt aufweisen.

Anstelle von Glasfasern oder neben den Glasfasern können andere oder zusätzliche Füll- oder Verstärkungsstoffe eingesetzt werden. Es können aber auch Mischungen aus zwei oder mehreren unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln, Glasfasern und/oder faserförmigen Füllstoffen und/oder Verstärkungsstoffen auf der Basis von Kohlenstofffasem enthalten sein. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Talk, Wollastonit oder Kaolin eingesetzt.

Besonders bevorzugt werden ferner auch nadelförmige mineralische Füllstoffe als Additiv eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite oder eben die Glasfasern genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm bestimmt mit einem CILAS GRANULOMETER.

Wie bereits oben bei der Glasfaser beschrieben, können auch die anderen Füllstoffe und/oder Verstärkungsstoffe gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich.

Für die Ausrüstung der als Additiv einzusetzenden Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert als die ursprünglich eingesetzten Füllstoffe wie z.B. die Glasfasern aufweisen.

Das Verfahren zur Verarbeitung der nach dem erfindungsgemäßen Verfahren erhältlichen Zusammensetzungen mittels Spritzguss ist bekannt.

Verfahren zur Herstellung von Erzeugnissen aus den Zusammensetzungen durch Spritzguss arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Die durch die genannten Verfahren erhältlichen Erzeugnisse zeigen aufgrund des optimierten Kristallisationsverhaltens der geschmolzenen erfindungsgemäß einzusetzenden Zusammensetzung überraschenderweise eine optimierte Kristallinität und als Folge dessen eine optimiertes Verarbeitungsverhalten. Überraschenderweise verkürzen sich durch den Einsatz der erfindungsgemäßen Zusammensetzungen die Zykluszeiten während des Spritzgussvorgangs wobei die Verarbeitungstemperaturen bzw. die Werkzeugtemperaturen zusätzlich reduziert werden können.

Zur Klarstellung sei angemerkt, dass vom Rahmen der Erfindung alle vorstehend aufgeführten, allgemeinen oder in Vorzugsbereichen genannten Definitionen und Parameter in beliebigen Kombinationen von der vorliegenden Erfindung umfasst sind.

### Beispiel

Zur Herstellung der erfindungemäß beschriebenen Zusammensetzungen werden die einzelnen Komponenten (PBT, PET, Glasfaser, Sonstige) in einem Zweiwellenextruder (ZSK 26 Mega Compounder der Fa. Coperion Werner & Pfleiderer (Stuttgart, Deutschland)) bei Temperaturen zwischen 260 und 290°C in der Schmelze vermischt, als Strang ausgetragen, bis zur Granulierfähigkeit abgekühlt und granuliert. Vor weiteren Schritten wird das Granulat bei 120°C im Vakuumtrockenschrank für ca. 2h getrocknet. Die in den Experimenten 1 bis 5 beschriebenen Untersuchungen finden jeweils an Granulat statt (DSC) beziehungsweise werden mit Granulat durchgeführt (Spritzguss).

Die Fließspirale mit einer Breite von 8mm und einer Dicke von 2,0 mm wird auf einer handelsüblichen Spritzgießmaschine bei einer Massetemperatur von 260°C und einer Werkzeugtemperatur von 80°C gespritzt. Maschine ist dabei so eingestellt, dass bei einem zu messenden Werkzeuginnendruck von 650 bar umgeschaltet wird auf Nachdruck.

Der Fülldruck ist der angussnah gemessene Werkzeuginnendruck, der aufgebracht wird, um die Werkzeugkavität zu füllen. Er ist in der Druckverlaufkurve ein charakteristischer Knickpunkt zwischen der Formfüll- und Verdichtungsphase und lässt sich über die Prozessdatenerfassung ermitteln. Er wird für Experiment 4 beim Spritzgießen von Flachstäben (80 x 10 x 4 mm³) bestimmt (Massetemperatur 260°C, Werkzeugtemperatur 80°C).

Bestimmung der Schmelzenthalpie:
Die Ermittlung der Schmelzenthalpie erfolgt anhand von DSC-Messungen (Differential-Scanning-Calorimetrie) auf dem DSC-Gerät STAR 822e, Firma Mettler Toledo (Software STARe SW 9.01).
Die Messung erfolgt nach folgendem Schema: 0 °C bis 300 °C mit 20 °C/min (1. Aufheizen), dann 300 °C bis 0 °C mit -10 °C/min (Abkühlung), dann 2 min bei 0 °C (Temperatur halten), dann 0 °C bis 300 °C mit 20 °C/min (2. Aufheizen).
Die Schmelzenthalpie wird mit Hilfe der oben genannten Software als Integral aus der 2.Aufheizen-Kurve (Temperatur gegen Watt/Gramm) ermittelt. Sie gilt als Maß für die Kristallinität.

Bestimmung der isothermen Kristallisationszeit:
Die Ermittlung der isothermen Kristallisationszeit erfolgt anhand von DSC-Messungen (Differential-Scanning-Calorimetrie) auf dem DSC-Gerät STAR 822e, Firma Mettler Toledo (Software STARe SW 9.01).
Die Messung erfolgt nach folgendem Schema: Aufheizen bis auf 280°C (40°C pro Minute); dann Temperatur halten bei 280°C für 1 Minute; dann Abkühlen auf 210°C (-400°C pro Minute); dann Temperatur halten bei 210°C.
Die isotherme Kristallisationszeit ist die Zeit, bei der bei der Haltetemperatur von 210°C kein Wärmefluss mehr gemessen wird (beendete Kristallisation). Dieser Zahlenwert ist ein Kennwert für die Kristallisationsgeschwindigkeit.

Bestimmung des Natrium- bzw. Kalium-Gehaltes im PET: Es wird ein übliches analytische Verfahren verwendet; zum Beispiel: PET wird in Salpetersäure bei erhöhter Temperatur und Druck aufgeschlossen; anschließend wird mit Wasser verdünnt; anschließend wird der Natrium- bzw. Kalium-Gehalt mit der Methode ICP-OES bestimmt.

PBT: Polybutylenterephthalat (Pocan® B 1300, Handelsprodukt der LANXESS Deutschland GmbH, Leverkusen, Deutschland) mit einer intrinsischen Viskosität von ca. 0,93 cm3/g (gemessen in Phenol : 1,2-Dichlorbenzol = 1:1 bei 25°C)

Glasfaser: Mit silanhaltigen Verbindungen beschlichtete Glasfaser mit einem Durchmesser von 10 µm (CS 7967, Handelsprodukt der LANXESS N.V., Antwerpen, Belgien)

Sonstige: weitere für die Verwendung in Polyestern gebräuchliche Additive wie zum Beispiel Entformungsmittel (z.B. Pentaerythrittetrastearat (PETS)), Thermostabilisatoren (z.B. auf Basis von Phenylphosphiten).

PET, Typ A:
Plus 80 von PET Kunststoffrecycling GmbH (PKR); enthält 20 ppm Natrium und < 1 ppm Kalium; Rezyklat aus PET-Flaschen; Isophthalsäure-Gehalt ca. 1 - 3 %.

Alternativ: CL80 von PET Recycling Team; enthält 9 ppm Natrium und < 1 ppm Kalium; Rezyklat aus PET-Flaschen; Isophthalsäure-Gehalt ca. 1 - 3 %.

### (Die Experimente wurden mit PET Plus 80 durchgeführt)

Ein solches PET mit einen Natrium- und / oder Kalium-Gehalt >1 ppm wird üblicherweise folgendermaßen hergestellt: Einsammeln von gebrauchten PET-Flaschen; Schreddern zu Flakes, Abtrennen von Etiketten, Deckeln, Fremdkörpern; Waschen mit Laugen (bevorzugt Natrium- und / oder Kalium enthaltende Laugen, insbesondere Natronlauge) und anderen Reinigungsmitteln; Trocknen der gereinigten Flakes; Schmelzecompoundierung; ggf. Entgasen in der Schmelze, ggf. Filtration in der Schmelze; Granulierung; ggf. Festphasennachkondensation.

PET, Typ B: Lighter C93 von Equipolymers Global GmbH (Horgen, Schweiz); enthält < 1 ppm Natrium und < 1 ppm Kalium; PET-Copolymer mit Isophthalsäure-Gehalt von ca. 1 - 3 %. Ein solches PET wird üblicherweise durch Polykondensation von Glycol und Dicarbonsäure bzw. Dicarbonsäuredimethylester mit Antimonkatalysator bzw. Titankatalysator hergestellt.

PET, Typ C: Polyclear T86 von Invista (Wichita, USA); enthält < 1 ppm Natrium und < 1 ppm Kalium; PET-Copolymer mit Isophthalsäure-Gehalt von ca. 3 - 5 %. Ein solches PET wird üblicherweise durch Polykondensation von Glycol und Dicarbonsäure bzw. Dicarbonsäuredimethylester mit Antimonkatalysator bzw. Titankatalysator hergestellt.

PET, Typ D: T49H von Invista (Wichita, USA); enthält < 1 ppm Natrium und < 1 ppm Kalium; PET-Homopolymer. Ein solches PET wird üblicherweise durch Polykondensation von Glycol und Terephthalsäure bzw. Terephthalsäuredimethylester mit Antimonkatalysator bzw. Titankatalysator hergestellt.
Experiment Serie 1:
   Zusammensetzung 1A: 38% PBT +31% PET Typ A + 30% Glasfaser + 1% Sonstige;
   Zusammensetzung 1B: 38% PBT + 31% PET Typ B + 30% Glasfaser + 1% Sonstige;
   Zusammensetzung 1C: 38% PBT + 31% PET Typ C + 30% Glasfaser+ 1% Sonstige;
   Zusammensetzung 1D: 38% PBT + 31% PET Typ D + 30% Glasfaser+ 1% Sonstige.
   Gemessen wurden die Schmelzenthalpien der Zusammensetzungen mit folgendem Ergebnissen: 1A (31,1 J/g), 1B (29,9 J/g), 1C (29,5 J/g), 1D (29,6 J/g).
   Eine hohe Enthalpie bedeutet ein hoher Kristallisationsgrad (gleichbedeutend mit einem größeren Ausmaß an Kristallisation). Ein hoher Kristallisationsgrad ist wichtig für hohe Maßhaltigkeit der Spritzgussteile (sonst treten nachteilige Nachkristallisationseffekte ein). Dieses Experiment zeigt, dass die Schmelzenthalpie bei der erfindungsgemäßen Zusammensetzung (1A) signifikant höher ist.
Experiment Serie 2:
   Zusammensetzung 2A: 34,5% PBT + 34,5% PET Typ A + 30% Glasfaser + 1% Sonstige;
   Zusammensetzung 2B: 34,5% PBT + 34,5% PET Typ B + 30% Glasfaser + 1% Sonstige;
   Zusammensetzung 2C: 34,5% PBT + 34,5% PET Typ C + 30% Glasfaser + 1% Sonstige;
   Zusammensetzung 2D: 34,5% PBT + 34,5% PET Typ D + 30% Glasfaser + 1% Sonstige.
   Gemessen wurden die Schmelzenthalpien der Zusammensetzungen mit folgendem Ergebnissen: 2A (29,0 J/g), 2B (26,6 J/g), 2C (28,0 J/g), 2D (23,6 J/g).
   Eine hohe Enthalpie bedeutet ein hoher Kristallisationsgrad (gleichbedeutend mit einem größeren Ausmaß an Kristallisation). Ein hoher Kristallisationsgrad ist wichtig für hohe Maßhaltigkeit der Spritzgussteile (sonst treten nachteilige Nachkristallisationseffekte ein). Dieses Experiment zeigt, dass die Schmelzenthalpie bei der erfindungsgemäßen Zusammensetzung (2A) signifikant höher ist.
Experiment Serie 3:
   Zusammensetzung 3A: 38% PBT +31% PET Typ A + 30% Glasfaser + 1 % Sonstige;
   Zusammensetzung 3B: 38% PBT +31% PET Typ B + 30% Glasfaser + 1 % Sonstige.
   Gemessen wurde die isotherme Kristallisation der Zusammensetzungen mit folgenden Ergebnissen: 3A (2,8 min), 3B (4,6 min).
   Die isotherme Kristallisation ist eine Maß für die Geschwindigkeit der Kristallisation. Je schneller die Kristallisation erfolgt desto kürzer die Zykluszeit im Spritzguss. Hier zeigt die erfindungsgemäße Zusammensetzung (3A), dass die isotherme Kristallisation deutlich verkürzt wird was in der technischen Anwendung zu einer verkürzten Zykluszeit führt.
Experiment Serie 4:
   Zusammensetzung 4A: 38% PBT +31% PET Typ A + 30% Glasfaser + 1 % Sonstige;
   Zusammensetzung 4D: 38% PBT +31% PET Typ D + 30% Glasfaser + 1 % Sonstige.
   Gemessen wurde der Fülldruck beim Verspritzen der Zusammensetzungen mit folgenden Ergebnissen: 4A (289 bar), 4D (367 bar).
   Ein geringerer Fülldruck eröffnet die Möglichkeit bei niedrigeren Massetemperaturen zu arbeiten. Dies führt zu einer kürzeren Abkühlzeit der Schmelze und in Folge dessen zu kürzeren Zykluszeiten. Voraussetzung für niedrigere Massetemperatur ist eine schnelle und ausreichende Kristallisation. Das Testergebnis führt zu der Erkenntnis, dass die erfindungsgemäße Zusammensetzung (4A) einen deutlich reduzierten Fülldruck zeigt. Dies eröffnet die Möglichkeit, kürzere Zykluszeiten zu realisieren.
Experiment Serie 5:
   Zusammensetzung 5A: 34,5% PBT + 34,5% PET Typ A + 30% Glasfaser + 1% Sonstige;
   Zusammensetzung 5D: 34,5% PBT + 34,5% PET Typ D + 30% Glasfaser + 1% Sonstige.
   Gemessen wurde jeweils die Länge der Fließspirale der Zusammensetzungen mit folgenden Ergebnissen: 5A (286 mm), 5D (275 mm).
   Die erfindungsgemäße Zusammensetzung (5A) zeigt eine längere Fließspirale und damit eine bessere Fließfähigkeit in der Schmelze. Eine bessere Fließfähigkeit eröffnet - unter der Voraussetzung einer schnellen und ausreichenden Kristallisation - die Möglichkeit bei niedrigeren Massetemperaturen zu arbeiten. Dies führt zu einer kürzeren Abkühlzeit der Schmelze und in Folge dessen zu kürzeren Zykluszeiten.

## Patentansprüche

1. Verfahren zur Optimierung des Kristallisationsverhaltens von Polyester Formmassen bzw. der Kristallinität der daraus herzustellenden Erzeugnisse, **dadurch gekennzeichnet, dass** eine Zusammensetzung enthaltend PBT und PET in einem Gewichtsverhältnis von 5:1 bis 0,2:1 eingesetzt wird, wobei ein PET in Form von Rezyklat aus Granulat, Flakes oder Mahlgut eingesetzt wird, das einen Natrium- und/oder Kalium-Gehalt von 1 bis 10000 ppm aufweist, indem man das PET nach den Verfahrensschritten
a) Waschen des PET mit Laugehaltigem Wasser
b) Aufschmelzen und Durchmischen des PET in einem Compounder, gegebenenfalls Anlegen von Vakuum (Entgasung) mit oder ohne Strippen zur Entfernung flüchtiger Kontaminationen, anschließend Austragen und Erstarren der Schmelze und Granulierung erhält.

2. Verfahren gemäß Anspruch 1, **dadurch gekennzeichnet, dass** es sich bei dem PET in a) um PET Flakes handelt, die durch Schreddern von gebrauchten PET-Flaschen erhalten wurden.

3. Verfahren gemäß Anspruch 1 oder 2 **dadurch gekennzeichnet, dass** im Anschluss an b) noch das Durchführen einer Festphasen- Nachkondensation unter Vakuum mit oder ohne Strippen oder unter Durchleitung eines interten Gases zur Entfernung restlicher Kontaminationen und/oder Erhöhung der Viskosität erfolgt.

4. Verfahren gemäß Anspruch 1 oder 2 **dadurch gekennzeichnet, dass** in a) Natronlauge- und/oder Kalilaugehaltiges Wassers, bevorzugt Natronlaugehaltiges Wasser eingesetzt wird.

5. Verfahren gemäß Anspruch 1 oder 2 **dadurch gekennzeichnet, dass** in b) das Aufmischen und Durchmischen des PET in einem Compounder mit mehreren Schnecken erfolgt.

6. Verfahren gemäß Anspruch 1, **dadurch gekennzeichnet, dass** es sich bei den Kontaminationen in b) um Aldehyde und Oligomere handelt.

7. Verfahren nach Anspruch 1 oder 2, **dadurch gekennzeichnet, dass** der Natrium- und/oder Kalium-Gehalt des einzusetzenden PET 3 bis 5000 ppm, bevorzugt 7 bis 1000 ppm beträgt.

8. Verfahren gemäß der Ansprüche 1 oder 2 **dadurch gekennzeichnet, dass** das einzusetzende PET bzw. PBT eine intrinsische Viskosität von ca. 0,3 cm³/g bis 1, 5 cm³/g gemessen in Phenol /o-Dichlorbenzol (1:1 Gew-Teile) bei 25° C aufweist.

9. Verfahren gemäß der Ansprüche 1 oder 2 **dadurch gekennzeichnet, dass** das PET mit laugehaltigem Wasser eines Konzentrationsbereichs von 1 bis 10%, bevorzugt 3% vorgewaschen wird, bevor es mit Tensid versetztem Wasser oder mit Dampf feingereinigt wird.

10. Verwendung von Granulat, Flakes oder Mahlgut aus PET Rezyklat mit einer maximalen Kantenlänge von 15 mm zur Optimierung des Kristallisationsverhaltens von Polyester Formmassen bzw. der Kristallinität der daraus herzustellenden Erzeugnisse, **dadurch gekennzeichnet, dass** in den Zusammensetzungen auf Basis von PBT und PET diese in einem Gewichtsverhältnis von 5:1 bis 0,2:1 eingesetzt werden und das PET einen Natrium- und/oder Kalium-Gehalt von 1 bis 10000 ppm aufweist, der durch Waschen des PET mit laugehaltigem Wasser herrührt, wobei Natronlauge- und/oder Kalilaugehaltiges Wasser eingesetzt wird.

## Claims

1. Process for optimizing the crystallization behaviour of polyester moulding compositions or the crystallinity of the products to be produced therefrom, **characterized in that** a composition comprising PBT and PET in a ratio by weight of from 5:1 to 0.2:1 is used, where a PET is used in the form of recyclate made of pellets, flakes or regrind which has a sodium content and/or potassium content of from 1 to 10 000 ppm, **in that** the PET is obtained in accordance with the following process steps:
a) washing the PET with water comprising aqueous alkali metal hydroxide solution
b) melting and mixing the PET in a compounder, optionally applying vacuum (devolatilization) with or without stripping to remove volatile contaminants, then discharging and solidifying the melt and pelletizing.

2. Process according to Claim 1, **characterized in that** the PET in a) involves PET flakes which have been obtained via shredding of used PET bottles.

3. Process according to Claim 1 or 2, **characterized in that**, following b), solid-phase post-condensation in vacuo is also carried out with or without stripping or with passage of an inert gas to remove residual contaminants and/or increase viscosity.

4. Process according to Claim 1 or 2, **characterized in that**, in a) water comprising aqueous sodium hydroxide solution and/or comprising aqueous potassium hydroxide solution, preferably water comprising aqueous sodium hydroxide solution, is used.

5. Process according to Claim 1 or 2, **characterized in that**, in b), the melting and mixing of the PET takes place in a compounder with a plurality of screws.

6. Process according to Claim 1, **characterized in that** the contaminants in b) involve aldehydes and oligomers.

7. Process according to Claim 1, or 2, **characterized in that** the sodium content and/or potassium content of the PET to be used is from 3 to 5000 ppm, preferably from 7 to 1000 ppm.

8. Process according to Claim 1 or 2, **characterized in that** the intrinsic viscosity of the PET or PBT to be used is about 0.3 cm³/g to 1.5 cm³/g, measured in phenol/o-dichlorobenzene (1:1 part by weight) at 25°C.

9. Process according to Claim 1 or 2, **characterized in that** the PET is pre-washed with water comprising aqueous alkali metal hydroxide solution in the concentration range from 1 to 10%, preferably 3%, before being subjected to further purification by water with admixed surfactant or by steam.

10. Use of pellets, flakes or regrind made of PET recylate with maximum edge length 15 mm for optimizing the crystallization behaviour of polyester moulding compositions or the crystallinity of the products to be produced therefrom, **characterized in that** in the compositions based on PBT and PET these are used in a ratio by weight of from 5:1 to 0.2:1, and the sodium content and/or potassium content of the PET is from 1 to 10 000 ppm and derives from washing the PET with water comprising aqueous alkali metal hydroxide solution, where water comprising aqueous sodium hydroxide solution and/or comprising aqueous potassium hydroxide solution is used.

## Revendications

1. Procédé pour l'optimisation du comportement de cristallisation de masses de moulage en polyester ou, selon le cas, de la cristallinité des objets à produire à partir de celles-ci, **caractérisé en ce qu'**on utilise une composition contenant du PBT et du PET dans un rapport pondéral de 5:1 à 0,2:1, en utilisant un PET sous forme de produit recyclé constitué par un granulat, des écailles ou un produit broyé, qui présente une teneur en sodium et/ou en potassium de 1 à 10 000 ppm, **en ce qu'**on obtient le PET selon les étapes de procédé
a) lavage du PET avec de l'eau contenant une base
b) fusion et mélange du PET dans un appareil de mélange, le cas échéant application d'un vide (dégazage) avec ou sans rectification pour éliminer des contaminants volatils, ensuite évacuation et solidification de la masse fondue et granulation.

2. Procédé selon la revendication 1, **caractérisé en ce qu'**il s'agit, pour le PET dans a) d'écailles de PET, qui sont obtenues par broyage de bouteilles usagées en PET.

3. Procédé selon la revendication 1 ou 2, **caractérisé en ce qu'**on réalise encore, consécutivement à b), une post-condensation en phase solide sous vide, avec ou sans rectification ou en faisant passer un gaz inerte en vue de l'élimination des contaminants résiduels et/ou de l'augmentation de la viscosité.

4. Procédé selon la revendication 1 ou 2, **caractérisé en ce qu'**on utilise dans a) de l'eau contenant de la lessive de soude caustique et/ou de la lessive de potasse, de préférence de l'eau contenant de la lessive de soude caustique.

5. Procédé selon la revendication 1 ou 2, **caractérisé en ce que** la fusion et le mélange du PET dans b) est effectué dans un appareil de mélange présentant plusieurs vis sans fin.

6. Procédé selon la revendication 1, **caractérisé en ce qu'**il s'agit, pour les contaminants dans b), d'aldéhydes et d'oligomères.

7. Procédé selon la revendication 1 ou 2, **caractérisé en ce que** la teneur en sodium et/ou en potassium du PET à utiliser vaut 3 à 5000 ppm, de préférence 7 à 1000 ppm.

8. Procédé selon les revendications 1 ou 2, **caractérisé en ce que** le PET ou, selon le cas, le PBT à utiliser présente une viscosité intrinsèque d'environ 0,3 cm³/g à 1,5 cm³/g, mesurée dans un mélange phénol/o-dichlorobenzène (1:1 en parties en poids) à 25°C.

9. Procédé selon les revendications 1 ou 2, **caractérisé en ce que** le PET est prélavé avec de l'eau contenant une base d'une plage de concentration de 1 à 10%, de préférence de 3%, avant de procéder à la purification fine avec de l'eau additionnée d'agent tensioactif ou avec de la vapeur.

10. Utilisation d'un granulat, de flocons ou d'un produit broyé en produit recyclé en PET présentant une longueur maximale de bord de 15 mm pour optimiser le comportement de cristallisation de masses de moulage en polyester ou, selon le cas, de la cristallinité des objets à produire à partir de celles-ci, **caractérisée en ce qu'**on utilise, dans les compositions à base de PBT et PET, ces derniers dans un rapport pondéral de 5:1 à 0,2:1 et le PET présente une teneur en sodium et/ou en potassium de 1 à 10 000 ppm, qui provient du lavage du PET avec de l'eau contenant une base, en utilisant de l'eau contenant de la lessive de soude caustique et/ou de la lessive de potasse.
